# EUROPEAN PATENT SPECIFICATION

(11) **EP 3 643 592 B1**
(45) Date of publication and mention of the grant of the patent: **09.03.2022**
(21) Application number: 19194725.8
(22) Date of filing: 30.08.2019
(51) Int. Cl.: B62K 5/02, B62K 5/08, B60B 19/14, B62D 61/06, B62J 43/10, B62J 43/28, B62K 5/025, B62M 13/00

(54) **AN ELECTRIC VEHICLE MOVABLE ON MOTORIZED DIRECTIONAL BALLS**
AUF MOTORISIERTEN RICHTUNGSKUGELN BEWEGLICHES ELEKTROFAHRZEUG
VÉHICULE ÉLECTRIQUE MOBILE SUR DES BILLES DIRECTIONNELLES MOTORISÉES

(30) Priority: 22.10.2018 IT 201800009654
(43) Date of publication of application: 29.04.2020
(73) Proprietor: Hydra Consulting S.r.l., 10064 Pinerolo (Torino) (IT)
(72) Inventor: ZONA, Mauro, I-10152 Torino (IT)
(74) Representative: Notaro, Giancarlo

(56) References cited:
- WO-A2-03/074869
- GB-A- 2 319 235
- JP-A- H0 891 004
- JP-A- S62 203 824
- US-A- 3 920 093
- US-A- 4 413 693

## Description

The present invention relates to an electric vehicle movable on motorized directional balls.

The invention is directed to a vehicle that can be used as a motorized chair, as an alternative mode of transport with respect to conventional solutions, and preferably also suitable for being easily transported or for example stored in the boot of a motor-vehicle, so that it can also be used, if desired, as a "tender" or support vehicle, after the vehicle has been parked.

Document JP H08 91004 discloses an electric vehicle having the features of the preamble of claim 1, i.e. including a structure mounted on balls arranged to roll on the ground,
wherein each ball is freely rotatably supported by a ball-supporting member about any axis passing through the centre of the ball,
wherein an actuating roller is associated with each ball, which is in friction contact with and above the ball, and which is rotatably supported about its axis by a roller-supporting structure,
wherein said roller-supporting structure is, in turn, rotatably mounted about a substantially vertical axis within a main supporting structure, which is rigidly connected to said ball-supporting member,
wherein said main supporting structure carries a first electric motor for driving the rotation of said roller-supporting structure about said substantially vertical axis, and
wherein said roller-supporting structure carries a second electric motor for driving the rotation of the roller about its axis,
in such a way that when the second electric motor is actuated, said roller causes, by friction, rotation of the ball about an axis passing through the centre thereof and parallel to the axis of the roller,
whereas when said first electric motor is actuated, said roller is oriented about said vertical axis, so as to vary the rolling direction of the ball.

As can be seen, in this known vehicle, the aforesaid second electric motor associated with each ball serves to actuate the rolling of the ball on the ground, while the first electric motor associated with the same ball controls the rolling direction of the ball.

Similar solutions are known from JP S62 203824 A, WO 03/074869 A2, US 4 413 693 A, GB 2 319 235 A, US 3 920 093 A.

The present invention is defined by claim 1 and preferred embodiments are defined by dependent claims 2 to 8.

In a preferred embodiment, the vehicle is provided with at least one control member which is operatively connected to an electronic controller located on the vehicle, said electronic controller being programmed to control the first electric motors and the second electric motors of all the balls of the vehicle depending on the position and the movement impressed on the aforesaid at least one control member.

In one embodiment example, a first control member is provided in the form of a lever articulated about a transverse axis anteriorly to the seat. The control lever is associated with a detection system of any known type, operatively connected to the electronic controller in such a way that, during use, the position, the direction of movement and/or the speed of movement and/or the acceleration of the movement of the control lever causes the acceleration or deceleration or braking of the vehicle, forward (for example, if the lever is pushed forward) or backward (in the case of the aforesaid example, if the lever is pulled backwards) with respect to the orientation of the seat. In this embodiment the seat is mounted on the vehicle structure so as to be free to perform limited lateral oscillations which are detected by a seat attitude detection system (for example, consisting of an inertial platform) to allow the electronic controller to control steering of the vehicle, by orienting the drive rollers of the balls, according to the lateral inclination imparted by the user to the seat.

In one variant, a single joy-stick control element is provided for controlling both the forward or backward movement and the steering of the vehicle.

However, nothing excludes the possibility of using control elements of any other type.

Still in the case of the preferred embodiment, the articulated legs of the vehicle are also used to house the electric batteries for supplying the electric motors (which can also be housed in the carrying structure of the vehicle).

Further characteristics and advantages of the invention will become apparent from the description that follows with reference to the attached drawings, provided purely by way of non-limiting example, wherein:
- Figure 1 is a perspective view of a preferred embodiment example of the vehicle according to the invention, with the top of the seat removed for clarity,

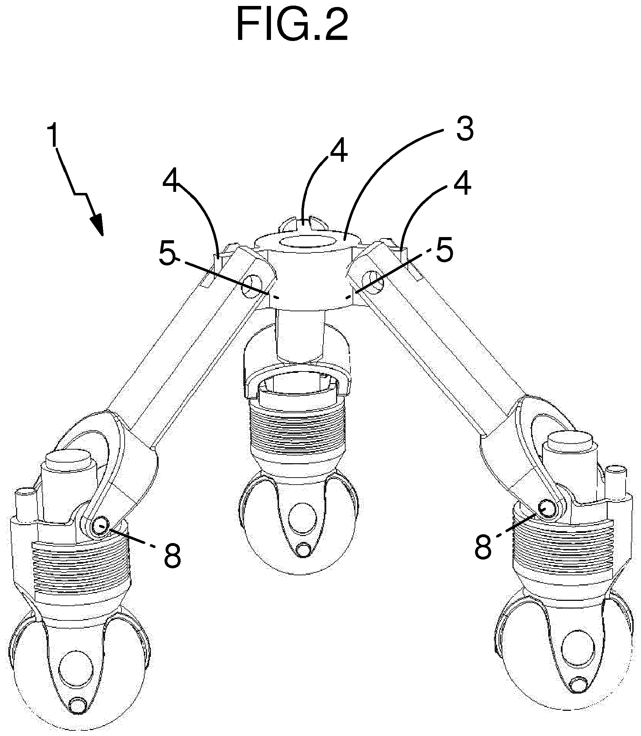

- Figure 2 is a perspective view of the vehicle of Figure 1, in which the support structure of the seat has also been removed,

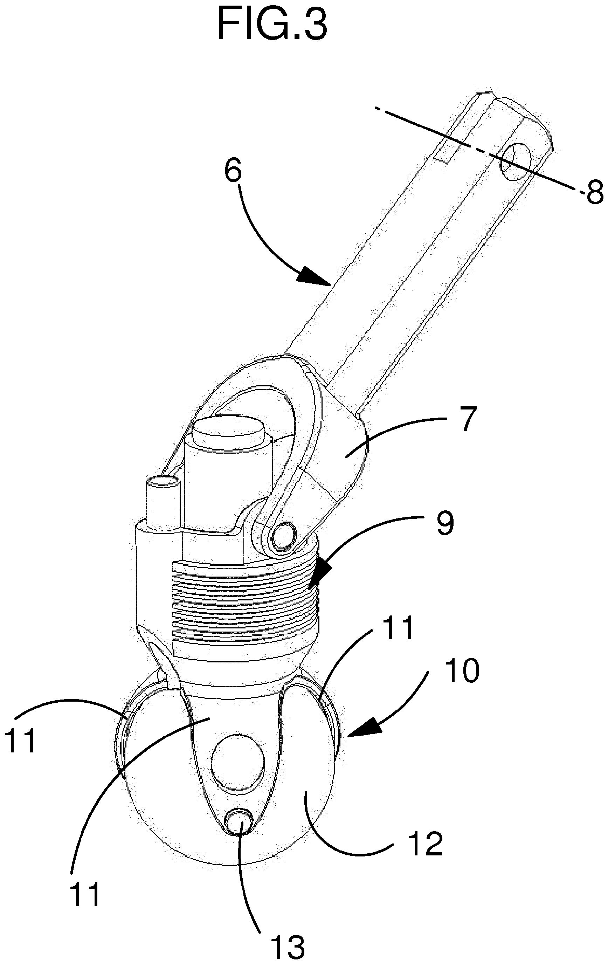

- Figure 3 is a perspective view of an articulated leg of the vehicle of Figure 1,
- Figure 4 is a perspective view on an enlarged scale of the assembly including the ball-supporting member and the main supporting structure associated therewith,
- Figure 5 shows the roller-supporting structure, with the relative electric motor for driving rotation of the roller, and the additional electric motor for orienting the aforesaid roller about the vertical axis,
- Figure 6 schematically shows the assembly of a ball and of the relative drive roller.

In the drawings, reference 1 indicates - in its entirety - an electric vehicle movable on motorized directional balls, which is supported and controlled in the manner that will be described in detail below.

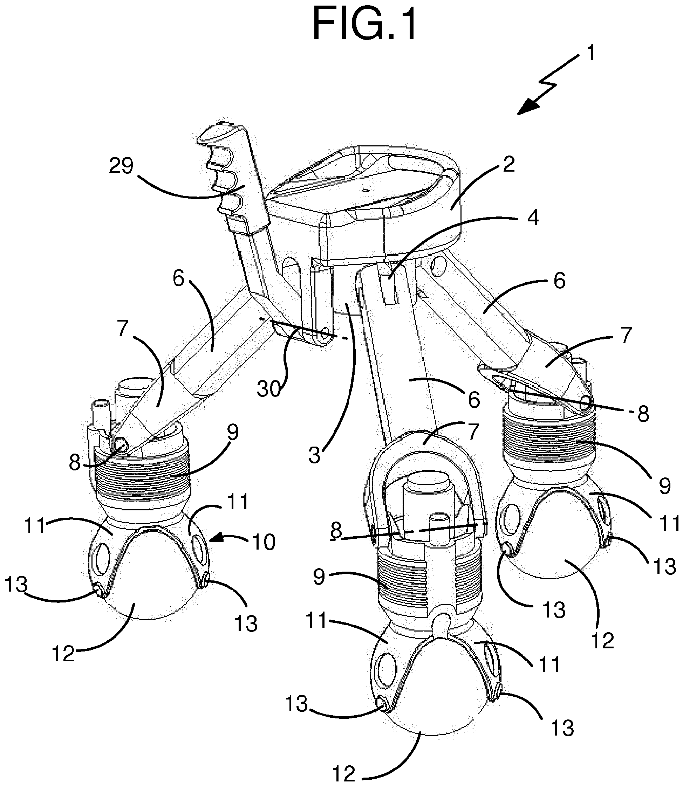

The embodiment illustrated here relates to the application of the invention to the case of a motorized chair, with a single seat 2, the upper structure of which is not shown in Figure 1.

The seat 2 is mounted, in a manner that will be described in detail below, on a main support structure 3, which in the example shown is in the form of an annular cylindrical body provided with three ears 4, spaced apart angularly from each other radially from the cylindrical body, on which the upper ends of three articulated legs 6 are mounted in an articulated manner about respective axes 5.

Still with reference to the illustrated example, each articulated leg 6 has a lower end 7 shaped like a fork, connected in an articulated manner about an axis 8 to a main support structure 9 rigidly connected to a ball-supporting member 10.

In the illustrated example, each ball-supporting member 10 comprises a triad of three curved flanges 11 which define a seat for a respective ball 12. The ends of the three flanges 11 terminate below the equatorial plane of the ball 12 and each carry an engagement element 13, for example, in the form of a freely rotating ball or a rounded-shaped foot, for rolling or sliding contact with the ball 12.

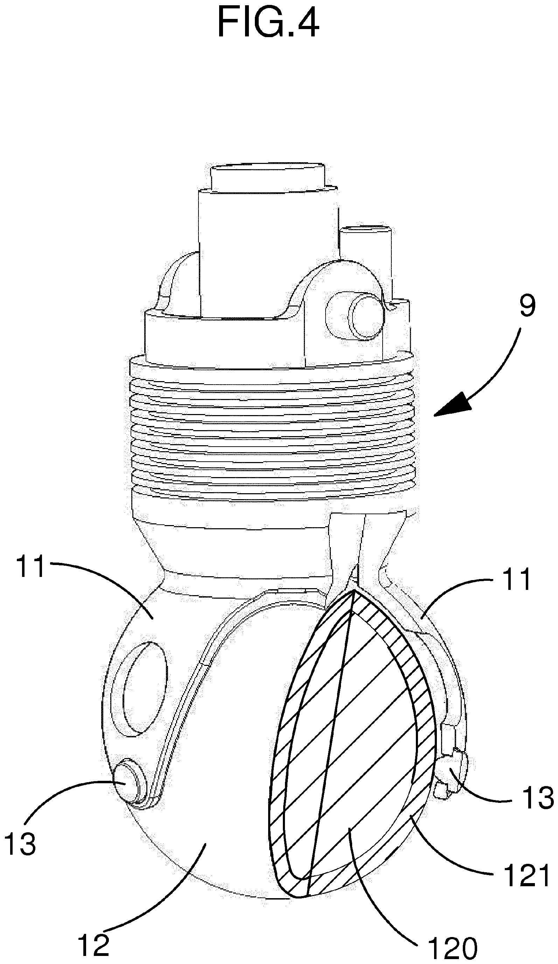

Still according to an embodiment, each ball 12 can have a core of metal material 120 (for example steel) or of composite material reinforced with fibre (for example, carbon fibre) and an outer layer of rubber 121 (of a type similar to that of used for motor-vehicle tires) vulcanized over the core (see Figure 4).

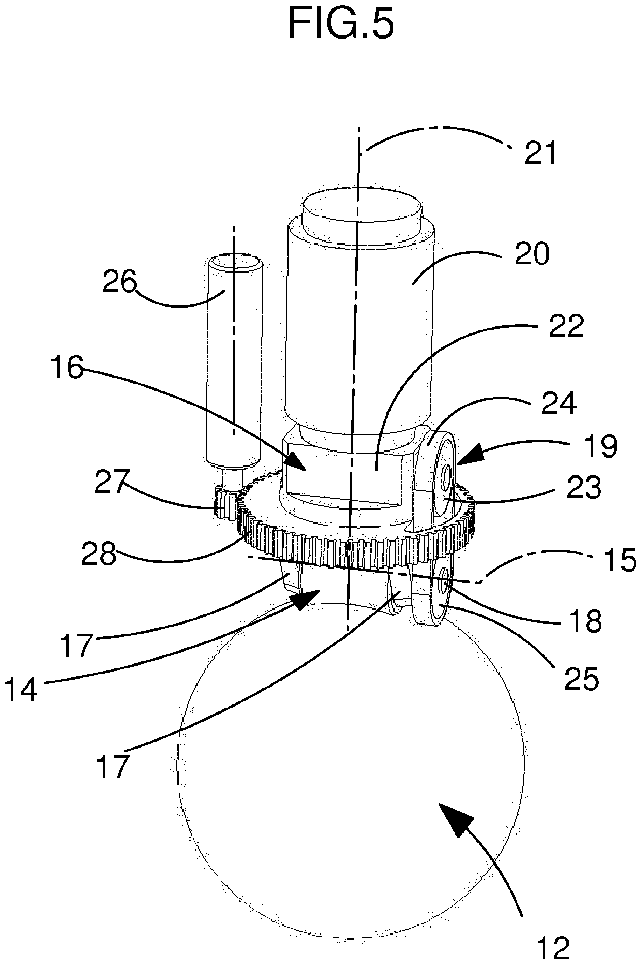

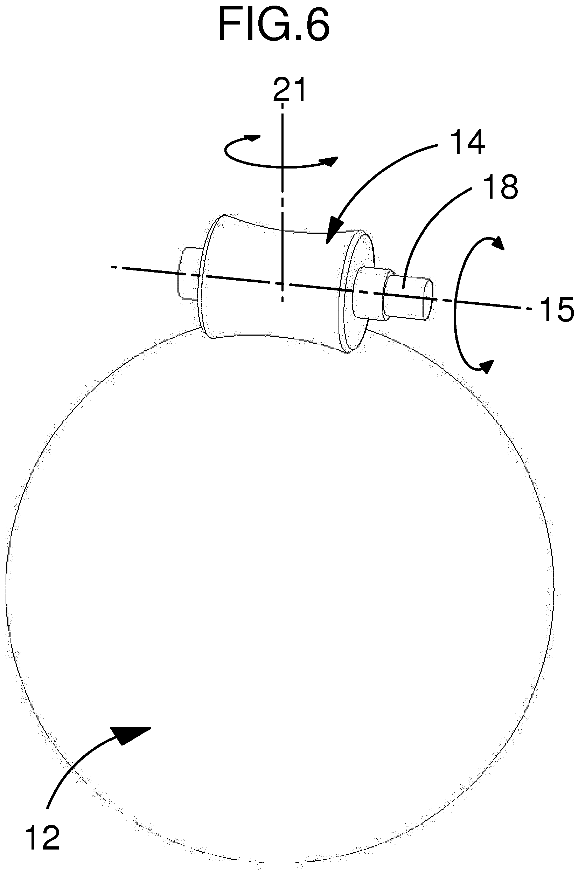

With reference in particular to Figures 5 and 6, above each ball 12 is an actuating roller 14, which is rotatably supported about a horizontal axis 15 by a roller-supporting structure 16. The roller-supporting structure 16 includes a pair of flanges 17 located at the two opposite ends of the roller 14, to rotatably support the shaft 18 of the roller. Rotation of the roller 14 is controlled by a transmission 19 by an electric motor 20.

In the illustrated example, the body of the electric motor 20 rises above the roller-supporting structure 11 and is oriented along a vertical axis 21.

The transmission 19, in the case of the illustrated example, includes a pair of bevel gears (not shown) of which the box 22 is visible, which allows transmission from the shaft (not shown) of the electric motor 20 to a pulley 23. The pulley 23 is, for example, a gear pulley in engagement with a toothed belt 24 that transmits the rotation of the pulley 23 to an additional pulley 25 mounted on the shaft 18 of the roller 17.

Of course, the transmission described above is mentioned here by way of example only. The transmission 19 could in fact be made in any other known way, for example by means of a pair of gears.

The entire assembly of the roller-supporting structure 16, with the transmission 19, the electric motor 20, and the roller 14, is rotatably mounted about the vertical axis 21 within a tubular body of the main support structure 9. Moreover, the main support structure 9 carries an electric motor 26 which controls the rotation of the roller-supporting structure 16 about the vertical axis 21, for example, by engaging a pinion 27 mounted on the shaft of the electric motor 26 with a ring gear 28 coaxially mounted on the roller-supporting structure 16. In the illustrated example, the ring gear 28 has a body with a slot through which the belt 24 of the transmission 19 extends.

With reference to Figure 6, the roller 14 is rotated by the electric motor 20 to cause the ball 12 to roll on the ground due to the frictional contact between the roller 14 and the ball 12.

As can be seen, in the preferred embodiment, the roller 14 has a body tapered from the ends towards the centre, so as to define a circular concave profile outwards, corresponding to the profile of the ball 12. Still in the case of the preferred embodiment, the roller 14 is, for example, composed of a core of metal material (for example, steel) or composite material (for example, carbon fibre) coated with a layer of rubber.

As indicated above, it is evident that activation of the electric motor 20 causes rotation of the roller 14 and the consequent rolling of the ball 12 on the ground. At the same time, activation of the electric motor 26 causes an orientation of the roller 14 about the vertical axis 21, which consequently determines the rolling direction of the ball 12, since, in principle, in every condition the ball 12 rolls by rotating about a horizontal axis parallel to the axis 15 of the roller 14.

Controlling the activation of the electric motors 20, 26 associated with the three balls 12 therefore enables control of the direction of movement, the speed of movement and the acceleration or deceleration of the vehicle 1. By controlling the electric motors 20 that control the drive rollers 14 of the three balls 12 it is possible, in particular, to also control deceleration and/or braking of the vehicle.

In the preferred embodiment, at least one electronic controller that controls the electric motors 20, 26 is provided on board the vehicle to obtain a movement and a direction of movement of the vehicle as a function of the commands given by the user.

For this purpose, in the preferred example shown here, the vehicle comprises a first control member 29 consisting of a control lever articulated to the front part of the seat 2 about a transverse axis 30. The lever 29 is operatively connected to any device able to detect the movement (direction and/or speed and/or acceleration) of the lever 29 and to send a signal to the electronic controller. The electronic controller is programmed in such a way as to cause a forward or backward movement, with an acceleration or a deceleration or even a braking function according to the position of the lever 29, of its direction of movement and/or of its speed of movement and/or its acceleration or deceleration.

Still in the case of the preferred embodiment, the seat structure 2 is mounted on the support structure 3 by any type of elastic suspension that allows the structure 2 to tilt laterally to the right or to the left. In this case as well, the structure of the seat 2 is operatively associated with any known type of device (for example, an inertial platform) configured to detect the attitude of the structure 2 and consequently control the steering of the vehicle by actuation of the electric motors 26 that orientate the ball drive rollers 12 about their respective vertical axes 21.

Therefore, the user can easily and intuitively control the vehicle by acting on the control lever 29 and moving the body laterally to tilt the seat from one side or the other, according to the required direction of movement.

It is of course possible to use any other type of control member, for example, a single joy-stick control member for controlling both forward or backward movements, and vehicle steering.

The electric batteries for supplying electric motors are arranged inside the articulated legs 6 and the vehicle structure.

Of course, the principle underlying the present invention is that of providing a plurality of rolling balls, which are set in rotation by respective actuating rollers positioned above them, with the actuating rollers that can each be oriented about a respective vertical axis crossing the axis of the roller, to vary the rolling direction of the respective ball. This basic principle can, of course, be applied to any vehicle configuration, even those that are very different from the one illustrated herein purely by way of example.

The vehicle configuration described herein lends itself to being used as a motorized chair, as an alternative means of transport to the traditional ones, by able-bodied and disabled people.

In the case of the illustrated example, the articulated legs 6 can be rotated about the axes 5 in a grouped condition of reduced bulk, in which the vehicle can be easily transported or stored in the boot of a motor-vehicle.

Of course, the details of construction and the embodiments may vary widely with respect to those described and illustrated purely by way of example, without departing from the scope of the present invention which is defined by the appended claims.

## Claims

1. An electric vehicle, including a structure (3) mounted on balls (12) which are arranged for rolling on the ground,
wherein each ball (12) is freely rotatably supported by a ball-supporting member (10) about any axis passing through the centre of the ball,
wherein an actuating roller (14) is associated with each ball (12), which is in friction contact with and above the ball (12) and which is rotatably supported about its axis (15) by a roller-supporting structure (16),
wherein said roller-supporting structure (16) is, in turn, rotatably mounted about a substantially vertical axis (21) within a main supporting structure (9) which is rigidly connected to said ball-supporting member (10),
wherein said main supporting structure (9) carries a first electric motor (26) for driving the rotation of said roller-supporting structure (16) about said substantially vertical axis (21), and
wherein said roller-supporting structure (16) carries a second electric motor (20) for driving the rotation of the roller (14) about its axis (15),
so that when the second electric motor (20) is actuated, said roller (14) causes, by friction, rotation of the ball (12) about an axis passing through the centre thereof and parallel to the axis (15) of the roller (14),
whereas when said first electric motor (26) is actuated, said roller (14) is oriented about said vertical axis (21), so as to vary the rolling direction of the ball (12),
said electric vehicle being **characterized in that**:
- the vehicle is a motorized chair, with a seat (2) carried by said structure (3),
- said structure (3) is provided with three articulated legs (6), each having a lower end (7) with which a respective ball (12) is associated,
- said main supporting structure (9) which is associated with each ball (12), and which rotatably supports said roller-supporting structure (16) about a substantially vertical axis (21), is pivotally supported about a horizontal axis (8) by the lower end of the respective articulated leg (6).

2. An electric vehicle according to claim 1, **characterized in that** it has at least one control member (29, 2) which is operatively connected to an electronic controller located on board the vehicle, said electronic controller being programmed for driving the first electric motors (20) and the second electric motors (26) of all the balls (12) of the vehicle, on the basis of the position and/or the movement imparted to said at least one control member (29, 2).

3. An electric vehicle according to claim 2, **characterized in that** it comprises a first control member (29) in the form of a lever pivotally mounted on the structure of the vehicle about a transverse axis in front of the seat, said control lever (29) being associated with a system for detecting the movement of the control lever (29), which is operatively connected to the electronic controller so that, in use, the position, the direction of movement and/or the speed of movement and/or the acceleration or deceleration of the movement of the control lever causes a forward or rearward movement of the vehicle and determines the speed and/or the acceleration or deceleration, or the braking, of the vehicle.

4. An electric vehicle according to claim 3, **characterized in that** the seat (2) is mounted on the structure of the vehicle in order to be free to have limited lateral oscillations, so as to be configured to act as a second control member, and
**in that** said vehicle comprises a system for detecting the attitude of the seat (2), which is operatively connected to the electronic controller so that, in use, a rightward or leftward inclination of the seat imparted by the user causes a corresponding rightward or leftward steering of the vehicle.

5. An electric vehicle according to claim 2, **characterized in that** a single control member is provided in the form of a joy-stick, for controlling both the forward or rearward movement, and the steering of the vehicle.

6. An electric vehicle according to claim 1, **characterized in that** electric supply batteries for said electric motors (20, 26) are housed within said articulated legs (6).

7. An electric vehicle according to claim 1, **characterized in that** each ball (12) comprises a core, for example, made of metal material or composite material, coated with a layer of rubber.

8. An electric vehicle according to claim 1, **characterized in that** said ball-supporting member comprises a plurality of curved flanges (11) defining a receptacle for the ball (12) and projecting downwardly from said main supporting structure (9), said curved flanges (11) having lower ends carrying engagement elements (13) configured to engage the ball (12) below an equatorial horizontal plane of the ball.

## Patentansprüche

1. Elektrofahrzeug mit einem Aufbau (3), der auf Kugeln (12) montiert ist, die zum Rollen auf dem Boden vorgesehen sind,
wobei jede Kugel (12) von einem Kugeltrageelement (10) um jede durch das Zentrum der Kugel gelangende Achse frei drehbar getragen ist,
wobei jeder Kugel (12) eine Betätigungsrolle (14) zugeordnet ist, die in Reibkontakt mit und oberhalb der Kugel (12) steht und die drehbar um ihre Achse (15) von einer Rollen tragenden Struktur (16) getragen wird,
wobei die Rollen tragende Struktur (16) wiederum drehbar um eine im Wesentlichen vertikale Achse (21) innerhalb einer Haupttragestruktur (9) montiert ist, die fest mit dem Kugeltrageelement (10) verbunden ist,
wobei die Haupttragestruktur (9) einen ersten Elektromotor (26) trägt zum Treiben der Drehung der Rollen tragenden Struktur (16) um ihre im Wesentlichen vertikale Achse (21), und wobei die Rollen tragenden Struktur (16) einen zweiten Elektromotor (20) trägt zum Treiben der Drehung der Rolle (14) um ihre Achse (15),
sodass bei Betätigung des zweiten Elektromotors (20) die Rolle (14) durch Reibung eine Drehung der Kugel (12) um eine Achse, die durch deren Zentrum verläuft, bewirkt und parallel zu der Achse (15) der Rolle (14),
während, wenn bei Betätigung des ersten Elektromotors (26) die Rolle (14) um die vertikale Achse (21) orientiert ist, um die Rollrichtung der Kugel (12) zu verändern,
wobei das Elektrofahrzeug **dadurch gekennzeichnet ist, dass**
- das Fahrzeug ein motorisierter Stuhl mit einem Sitz (2) ist, der von dem Aufbau (3) getragen wird,
- der Aufbau (3) mit drei angelenkten Beinen (6) versehen ist, von denen jedes ein unteres Ende (7) hat, zu dem eine jeweilige Kugel (12) gehört,
- die Haupttragestruktur (9), die zu jeder Kugel (12) gehört und die die Rollen tragende Struktur (16) drehbar um eine im Wesentlichen vertikale Achse (21) trägt, um eine horizontale Achse (8) über das untere Ende des jeweiligen angelenkten Beins (6) schwenkbar getragen ist.

2. Elektrofahrzeug nach Anspruch 1, **dadurch gekennzeichnet, dass** es wenigstens ein Steuerelement (29, 2) hat, das betriebsmäßig mit einer elektronischen Steuereinrichtung verbunden ist, die in dem Fahrzeug angeordnet ist, wobei die elektronische Steuereinrichtung derart programmiert ist, dass sie die ersten Elektromotoren (20) und die zweiten Elektromotoren (26) all der Kugeln (12) des Fahrzeugs basierend auf der Position und/oder der Bewegung antreibt, die dem wenigstens einem Steuerelement (29, 2) übermittelt wurde.

3. Elektrofahrzeug nach Anspruch 2, **dadurch gekennzeichnet, dass** es ein erstes Steuerelement (29) in Form eines Hebels aufweist, der vor dem Sitz an dem Aufbau des Fahrzeugs um eine transversale Achse schwenkbar montiert ist, wobei der Steuerhebel (29) in Verbindung steht mit einem System zur Erfassung der Bewegung des Steuerhebels (29), das betriebsmäßig mit der elektronischen Steuereinrichtung derart verbunden ist, dass im Gebrauch die Position, die Richtung der Bewegung und/oder die Geschwindigkeit der Bewegung und/oder die Beschleunigung oder Verzögerung der Bewegung des Steuerhebels eine Vorwärts- oder Rückwärtsbewegung des Fahrzeugs bewirkt und die Geschwindigkeit und/oder die Beschleunigung oder Verzögerung oder das Bremsen des Fahrzeugs bestimmt.

4. Elektrofahrzeug nach Anspruch 3, **dadurch gekennzeichnet, dass** der Sitz (2) an dem Aufbau des Fahrzeugs montiert ist, um frei zu sein in Bezug auf begrenztes seitliches Pendeln, um ausgestaltet zu sein, um als zweites Steuerelement zu wirken und
dass das Fahrzeug ein System zur Erfassung der Stellung des Sitzes (2) aufweist, das betriebsmäßig mit der elektronischen Steuereinrichtung verbunden ist, sodass im Gebrauch eine von dem Nutzer auferlegte Neigung des Sitzes nach rechts oder links eine entsprechende Lenkung des Fahrzeugs nach rechts oder links bewirkt.

5. Elektrofahrzeug nach Anspruch 2, **dadurch gekennzeichnet, dass** ein einzelnes Steuerelement vorgesehen ist in Form eines Joysticks, zur Steuerung sowohl der Vorwärtsoder Rückwärtsbewegung und zur Lenkung des Fahrzeugs.

6. Elektrofahrzeug nach Anspruch 1, **dadurch gekennzeichnet, dass** Batterien zur Stromversorgung der Elektromotoren (20, 26) innerhalb der angelenkten Beine (6) aufgenommen sind.

7. Elektrofahrzeug nach Anspruch 1, **dadurch gekennzeichnet, dass** jede Kugel (12) einen Kern, beispielsweise hergestellt aus metallischem Material oder Verbundwerkstoff, umfasst, der mit einer Gummischicht überzogen ist.

8. Elektrofahrzeug nach Anspruch 1, **dadurch gekennzeichnet, dass** das Kugeltrageelement mehrere gebogene Ausleger (11) aufweist, die eine Aufnahme für die Kugel (12) definieren und von der Haupttragestruktur (9) nach unten vorstehen, wobei die gebogenen Ausleger (11) untere Enden haben, die Eingriffselemente (13) tragen, die ausgestaltet sind zum Greifen der Kugel (12) unterhalb einer äquatorial horizontalen Ebene der Kugel.

## Revendications

1. Véhicule électrique, comprenant une structure (3) montée sur des billes (12) qui sont agencées pour rouler sur le sol,
dans lequel chaque bille (12) est supportée librement en rotation par un organe de support de bille (10) autour de n'importe quel axe passant par le centre de la bille,
dans lequel un rouleau d'actionnement (14) est associé à chaque bille (12), qui est en contact de friction avec et au-dessus de la bille (12) et qui est supporté en rotation autour de son axe (15) par une structure de support de rouleau (16),
dans lequel ladite structure de support de rouleau (16) est, à son tour, montée en rotation autour d'un axe sensiblement vertical (21) à l'intérieur d'une structure de support principale (9) qui est reliée rigidement audit organe de support de bille (10),
dans lequel ladite structure de support principale (9) porte un premier moteur électrique (26) pour entraîner la rotation de ladite structure de support de rouleau (16) autour dudit axe sensiblement vertical (21), et
dans lequel ladite structure de support de rouleau (16) porte un deuxième moteur électrique (20) pour entraîner la rotation du rouleau (14) autour de son axe (15),
de sorte que lorsque le deuxième moteur électrique (20) est actionné, ledit rouleau (14) provoque, par friction, la rotation de la bille (12) autour d'un axe passant par son centre et parallèle à l'axe (15) du rouleau (14),
tandis que lorsque ledit premier moteur électrique (26) est actionné, ledit rouleau (14) est orienté autour dudit axe vertical (21), de manière à faire varier la direction de roulement de la bille (12),
ledit véhicule électrique étant **caractérisé en ce que** :
- le véhicule est une chaise motorisée, avec un siège (2) porté par ladite structure (3),
- ladite structure (3) est pourvue de trois pattes articulées (6), ayant chacune une extrémité inférieure (7) à laquelle une bille respective (12) est associée,
- ladite structure de support principale (9) qui est associée à chaque bille (12), et qui supporte en rotation ladite structure de support de rouleau (16) autour d'un axe sensiblement vertical (21), est supportée en pivotement autour d'un axe horizontal (8) par l'extrémité inférieure de la patte articulée respective (6).

2. Véhicule électrique selon la revendication 1, **caractérisé en ce qu'**il a au moins un organe de commande (29, 2) qui est relié de manière fonctionnelle à une unité de commande électronique située à bord du véhicule, ladite unité de commande électronique étant programmée pour entraîner les premiers moteurs électriques (20) et les deuxièmes moteurs électriques (26) de toutes les billes (12) du véhicule, sur la base de la position et/ou du mouvement conféré(e)(s) audit au moins un organe de commande (29, 2).

3. Véhicule électrique selon la revendication 2, **caractérisé en ce qu'**il comprend un premier organe de commande (29) en forme de levier monté en pivotement sur la structure du véhicule autour d'un axe transversal devant le siège, ledit levier de commande (29) étant associé à un système de détection du mouvement du levier de commande (29), qui est relié de manière fonctionnelle à l'unité de commande électronique de sorte que, en cours d'utilisation, la position, la direction de mouvement et/ou la vitesse de mouvement et/ou l'accélération ou la décélération du mouvement du levier de commande provoque un mouvement vers l'avant ou vers l'arrière du véhicule et détermine la vitesse et/ou l'accélération ou la décélération, ou le freinage, du véhicule.

4. Véhicule électrique selon la revendication 3, **caractérisé en ce que** le siège (2) est monté sur la structure du véhicule afin d'être libre d'avoir des oscillations latérales limitées, de manière à être configuré pour agir en tant que deuxième organe de commande, et
**en ce que** ledit véhicule comprend un système de détection de l'attitude du siège (2), qui est relié de manière fonctionnelle à l'unité de commande électronique de sorte que, en cours d'utilisation, une inclinaison vers la droite ou vers la gauche du siège conférée par l'utilisateur provoque une direction correspondante vers la droite ou vers la gauche du véhicule.

5. Véhicule électrique selon la revendication 2, **caractérisé en ce qu'**un seul organe de commande se présente sous la forme d'un levier de commande, pour commander à la fois le mouvement vers l'avant ou vers l'arrière, et la direction du véhicule.

6. Véhicule électrique selon la revendication 1, **caractérisé en ce que** des batteries d'alimentation électrique pour lesdits moteurs électriques (20, 26) sont reçues à l'intérieur desdites pattes articulées (6).

7. Véhicule électrique selon la revendication 1, **caractérisé en ce que** chaque bille (12) comprend un noyau, par exemple, réalisé en un matériau métallique ou en un matériau composite, revêtu d'une couche de caoutchouc.

8. Véhicule électrique selon la revendication 1, **caractérisé en ce que** ledit organe de support de bille comprend une pluralité de brides incurvées (11) définissant un réceptacle pour la bille (12) et faisant saillie vers le bas depuis ladite structure de support principale (9), lesdites brides incurvées (11) ayant des extrémités inférieures portant des éléments d'engagement (13) configurés pour s'engager avec la bille (12) en dessous d'un plan horizontal équatorial de la bille.
